# EUROPEAN PATENT APPLICATION

(11) **EP 1 160 194 A2**
(43) Date of publication of application: **05.12.2001**
(21) Application number: 01304420.1
(22) Date of filing: 18.05.2001
(51) Int. Cl.: C01B 13/11, H02M 7/538

(54) **Ozone generator with water cooled glass dielectric**

(30) Priority: 18.05.2000 CA 308935
(71) Applicant: Hankin Atlas Ozone Systems Limited, Scarborough, Ontario M1H 3A6 (CA)
(72) Inventor: MacKay, Richard, Scarborough, Ontario, M1H 3A6 (CA)
(74) Representative: Brookes Batchellor

(57) **Abstract**

An ozone generator to produce highly pure ozone gas which uses ordinary water for the low voltage electrode and for directly cooling the glass dielectric and utilizing a high frequency resonant circuit and a threaded rod high voltage electrode of which the pitch and depth can be varied to improve performance efficiency and reliability.

## Description

The present invention relates generally to the field of ozone generation, and more particularly it relates to improvements in the control of ozone production in ozone generators using tubular electrodes.

### BACKGROUND Of THE INVENTION

Ozone, O₃, is made from stable oxygen, O₂, and has many widespread industrial applications including the destruction of organic and inorganic contaminants in waste water and sludge disinfection, environmentally friendly bleaching of paper, etching surfaces of semiconductors, decolorizing water, removing odour from clothing and killing insects, to name but a few.

Since ozone is unstable at ambient temperatures and decomposes quickly, it must be manufactured on site for industrial applications. Two general techniques in ozone production are currently available. One utilizes electrochemical techniques to generate ozone atoms, requiring electrochemical cells composed of an anode and a cathode conducting electricity through a solution or a solid. This technique produces toxic by-products which can be difficult to dispose of. The second general technique utilizes an electrical discharge to generate ozone atoms, requiring that a discharge passes through an oxygen gas and converts oxygen to ozone.

Industrial ozone generators using tubular electrodes are generally composed of elementary electrodes connected in parallel, each electrode being composed of a cylindrical glass dielectric, which is closed at one end and coated with a metallic coating on its interior. An annular space is formed between the outside of the dielectric and the interior of the larger diameter metallic cylinder. The exterior of the metallic electrode is cooled with water. A gas containing oxygen is passed through the annular space and a high alternating voltage is applied to the inner metallic coating. The outer electrode is earth grounded for safety and the voltage supplied to the inner electrode is either stepped up from the main supply or through a DC/AC inverter.

Both of the above techniques suffer from high electrical consumption and low conversion efficiencies. There exists other specific methods of producing ozone using high energy methods, for example, UV lights, beta rays or lasers, to convert oxygen to ozone but these methods have not found significant commercial application.

Current applications of ozone are limited by the cost of instrumentation required, as well as the previously mentioned high consumption of electricity during ozone production and the low efficiencies of converting oxygen to ozone. Furthermore, over the years, significant efforts have been made to refine ozone generators and the power supplies which form an integral part of their operating circuitry. These efforts have been particularly directed at increasing their efficiency to reduce their cost of operation and the cost of manufacture of ozone per unit of power consumed. Many factors have contributed to setting prior art limitations of efficiency, including the characteristics of the voltage and current periodic waveforms.

It is clear that there exists a need for a new and improved apparatus for improving the ozone generating efficiency of current devices and methods.

### SUMMARY OF THE INVENTION

The present invention overcomes the above shortcomings.

Briefly, it is an object of the present invention to provide an ozone generator wherein the capacitance and surface area of the inner electrode are adapted thereby resulting in improved ozone generating efficiency.

A further object of the present invention is the novel means providing a self-resonant centre tapped high voltage transformer using only two switching devices for inversion of the . DC supply voltage.

To achieve the foregoing objects, the present invention provides an ozone generator, comprising: a high voltage source including means for connecting to electrodes; an ozone generating tube constructed of a high voltage threaded rod electrode having variable pitch and depth, a ground electrode and an unmetallized cylindrical glass dielectric positioned between said high voltage electrode and ground electrode; a gas inlet pipe for feeding oxygen to said ozone generator; a water jacket for cooling said ozone generator; and an ozone outlet pipe for delivering resulting ozone gas from said ozone generator to a desired location for use.

A still further object of the present invention is to provide a current source inverter power supply circuit for supplying an ozone generator, comprising: a AC/DC semiconductor switch bridge rectifier coupled at its input terminals to an alternating current power source and at its output terminals to an electrical network; commutating capacitors; said electrical network having a step up high voltage transformer forming a resonant circuit; and transistors switched via feedback winding; wherein a self-resonant centre tapped high voltage transformer using switching devices for inversion of the DC supply voltage is provided for coupling to the ozone generator.

Further objects and advantages of the present invention will be apparent from the following description, wherein preferred embodiments of the invention are clearly shown.

### BRIEF DESCRIPTION OF THE DRAWINGS

The present invention will be further understood from the following description with reference to the drawings in which:
Figure 1 is a front cross-sectional view of an ozone generator in accordance with the present invention;
Figure 2 is a transverse cross-sectional view taken along line A-A of Figure 1 showing one of the ozone generator segments;
Figure 3 is an enlarged view of section B of Figure 1 showing the threaded rod;
Figure 4 is a circuit diagram of an exemplary embodiment of a solid state power supply and control circuit for an ozone generator in accordance with the present invention;
Figure 5 is a cutaway perspective view of an exemplary ozone generator assembly in accordance with the present invention;
Figure 6 is a graph showing the results of ozone production relative to the amount of power applied with an unthreaded rod; and
Figure 7 is a graph showing the results of ozone production relative to the amount of power applied with a threaded rod in accordance with the present invention.

### DETAILED DESCRIPTION OF THE INVENTION

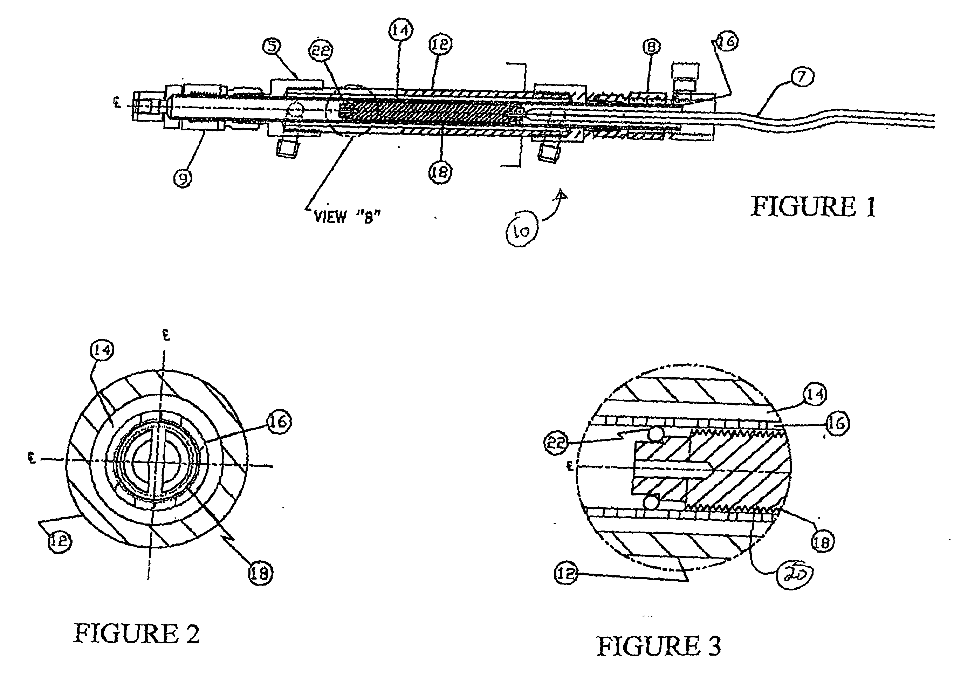

Generally shown in Figures 1 to 3, ozone generators 10 of the type contemplated herein generally include an outer casing or housing 12, a ground electrode 14 formed with a lining of its inner surface with glass 16 by way of welding or the like. The resulting cylindrical glass dielectric 16 is interlaid between the ground electrode 14 and a high voltage electrode 18. The cylindrical glass dielectric 16 is cooled on its outside with water which passes over the unmetallized cylindrical dielectric 16 in a water jacket. The water should have some mineral content for electrical conductivity and ordinary tap water generally has sufficient mineral content for that purpose. Further, the dielectric 16 need not be coated with a metallized film since the water will act as a conductor. The inner, high voltage electrode 18 is made from a metallic threaded rod, for instance SUS 316 stainless steel. The threaded rod 20 tread pitch and depth can be varied to achieve different level of performance which may improve the efficiency of the discharge even further. The inner rod 18 is held coaxially within the glass dielectric 16 with TEFLON ™ or similar material O-rings 22. The threaded rod 20 reduces the capacitance and surface area of the electrode 18.

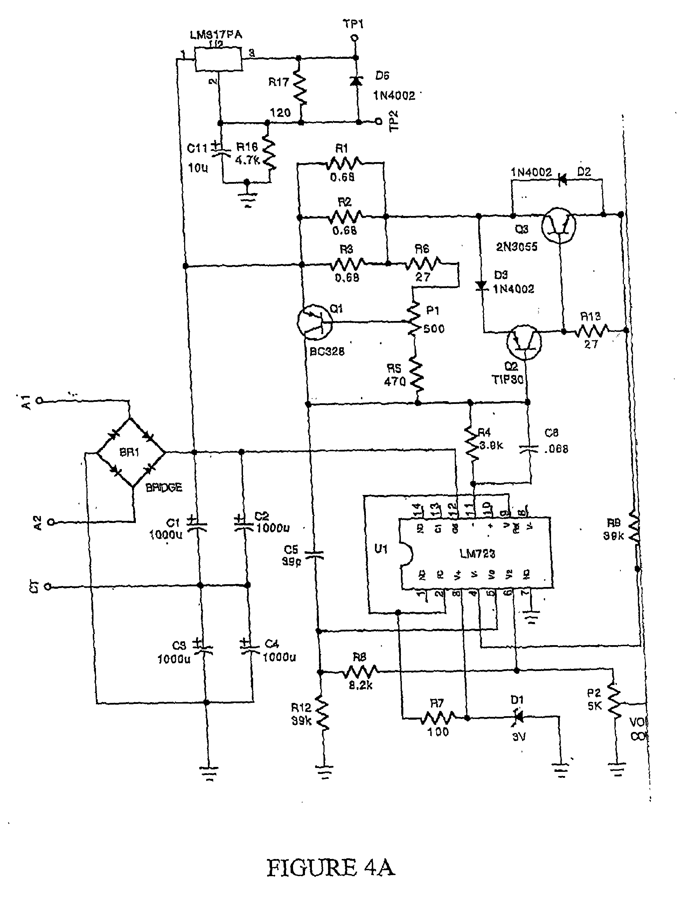

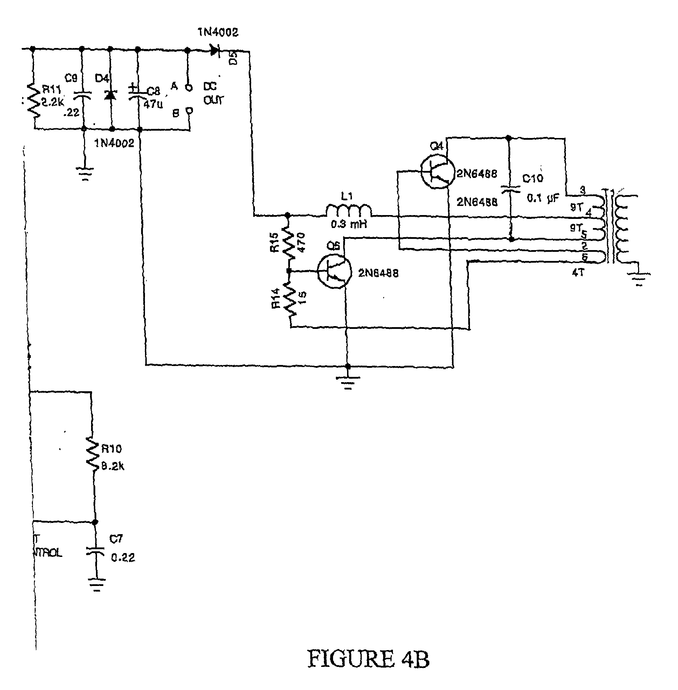

Describing the power supply structure to the high voltage electrode 18, reference will be made to key parts of Figure 4. The power supply circuit for supplying the ozone generator 10 comprises a AC/DC semiconductor switch bridge inverter 44 (BR1) coupled at its input to an alternative current power source and at its output to the electrical network which includes filtering capacitor 45 (C1). This voltage is modulated by transistor 48 (Q3) and passes through diode 53 (D5) to the inductor 46 (L1). The smoothing inductor 46 connects to the centre tap of the high voltage transformer. The DC voltage modulation is accomplished by the voltage regulator integrated circuit 47. Potentiometer 51 (P2) adjusts the DC voltage from 2 to 30 VDC: Resistor 55 (R1) serves as a current measuring device shunt, which feeds back into 49 (Q1) for setting the current limit, the current limit being ultimately set by potentiometer 50 (P1). The power circuit is made up of a DC power supply delivering DC voltage to the centre tap of a high voltage step up transformer 40. A smoothing inductor is placed in series between the DC voltage and the centre tap transformer. The transformer characteristics are adjusted to form a resonant circuit with the capacitive load of the generator cell to resonate at a desired frequency. This frequency can be from 1 to 40 kHz. Each leg of the transformer 40 is connected through a transistor 42. The transistors are switched via a feedback winding in the transformer 40. Without the load connected the circuit oscillates at a higher frequency. When the ozone generator 10 capacitive cell is connected the frequency self adjusts to a lower frequency depending on the total capacitance and the saturating characteristics of the transformer 40. The air gap of the transformer 40 will also affect the resonant frequency. The result is a self-resonant centre tapped high voltage transformer using only two switching devices for inversion of the DC supply voltage.

The power source as described above is connected across the electrode 18 to produce ozone in the channels formed in the space between the electrodes. Air is then blown or drawn through the ozone generator 10 by means of a blower or fan to discharge the ozone either into or onto the product or material to be treated.

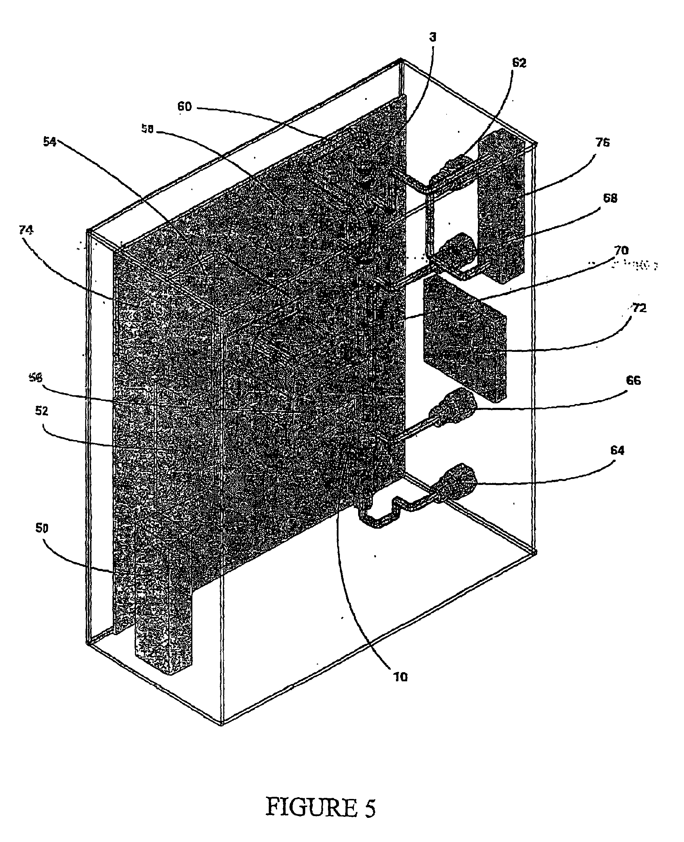

In Figure 5, an ozone generator module is schematically shown having interconnected a power entry module 50, a DC section of power supply board 52 an inverter section 54 of power supply board, a supply transformer 56, a high voltage transformer 58, said resulting high voltage then being fed to the ozone generator 10 via the high voltage cable 60. A gas inlet pipe 62 and an ozone outlet pipe 64 are specifically provided, respectively, on the upper side and the lower side of the module since the ozonized gas is greater in specific gravity than oxygen and therefore tends to stay on the bottom. Further, cooling water inlet 66 and outlet 68 are provided forming a U-shaped cooling water passage in the water jacket of the ozone generator 10. The corona discharge cell 70, combined to passing gaseous oxygen or air through a high voltage, provides for molecular oxygen (O₂) disassociating into atomic oxygen in an energizing environment that allows the recombination of atoms into ozone (O₃) form. A cooling air inlet filter 72, an outlet fan 64 and a flow meter 76 are also provided for measuring and ensuring peak performance.

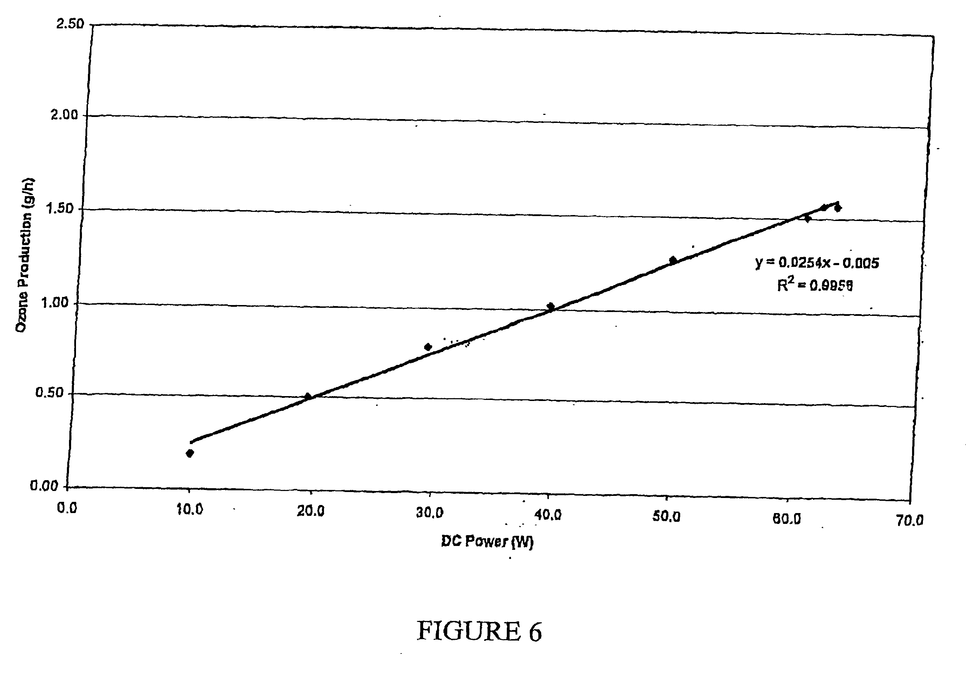

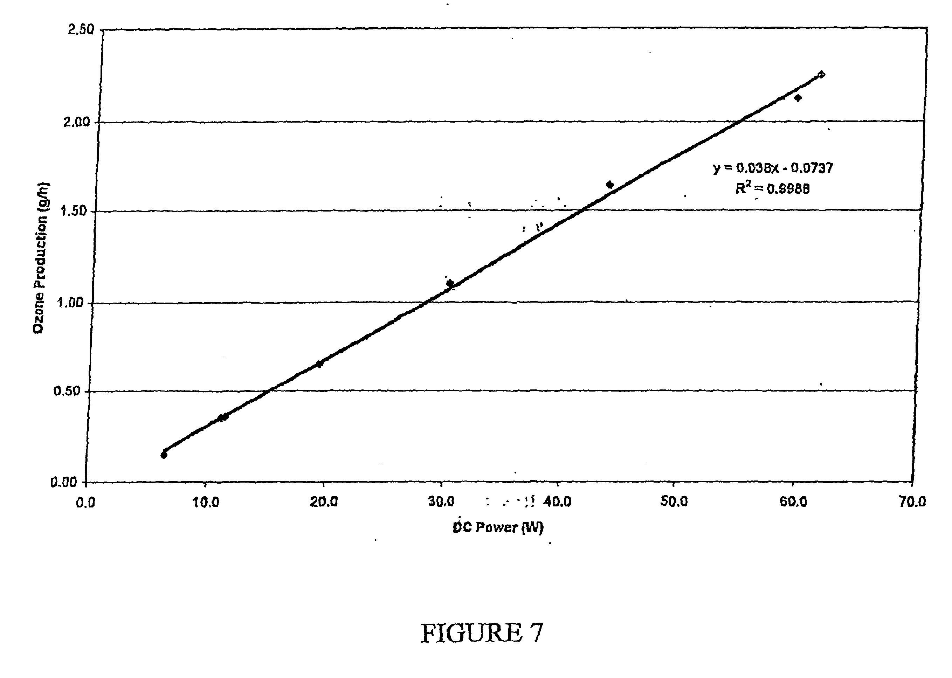

Next, operation characteristics of the ozone generator 10 of the above construction will be described. Referring to Figures 6 and 7, it can be seen that tests were performed in order to evaluate the performance of the unthreaded and threaded rods in a similar applied power range. Oxygen flow, oxygen pressure, cooling water flow and cooling water temperature were maintained at the same levels, more or less 5%, for all of the tests. The test results are revealing. A linear curve was fitted to both the unthreaded and threaded rod data. As shown on the figures, the rate of production increase versus the applied power was 50% higher in the case of the threaded rod as compared to the unthreaded one. It follows that a particularly important increase in efficiency will help reduce the cost of operation of the ozone generator and the cost of manufacturing of ozone per unit of power consumed.

The invention may be embodied in other specific forms without departing from the spirit or essential characteristics thereof. The present embodiments are therefore to be considered as illustrative and not restrictive, the scope of the invention being indicated by the appended claims rather than by the foregoing description, and all changes that come within the meaning and range of equivalency of the claims are therefore intended to be embraced therein.

## Claims

1. An ozone generator, comprising:
a) a high voltage source;
b) an ozone generating tube constructed of a high voltage threaded rod electrode, a ground electrode and a cylindrical glass dielectric;
c) a gas inlet pipe;
d) a water jacket; and
e) an ozone outlet pipe for delivering ozone gas from said ozone generator to a desired location.

2. An ozone generator according to claim 1, wherein the glass dielectric is unmetallized.

3. An ozone generator according to claim 1 or claim 2, wherein the threaded rod electrode has variable pitch and depth.

4. An ozone generator according to any one of the preceding claims, wherein the glass dielectric is positioned between a ground electrode and the high voltage threaded rod electrode.

5. An ozone generator according to any one of the preceding claims, wherein means for connecting said electrodes to the high voltage source are provided.

6. An ozone generator, comprising:
a) a high voltage source including means for connecting to electrodes;
b) an ozone generating tube constructed of a high voltage threaded rod electrode having variable pitch and depth, a ground electrode and an unmetallized cylindrical glass dielectric positioned between said high voltage electrode and ground electrode;
c) a gas inlet pipe for feeding oxygen to said ozone generator;
d) a water jacket for cooling said ozone generator; and
e) an ozone outlet pipe for delivering resulting ozone gas from said ozone generator to a desired location for use.

7. An ozone generating tube comprising a high voltage threaded rod electrode.

8. An ozone generating tube according to claim 7, wherein the threaded rod electrode pitch and depth can be varied.

9. A current source inverter power supply circuit for supplying an ozone generator, comprising:
a) a AC/DC semiconductor switch bridge rectifier coupled at its input terminals to an alternating current power source and at its output terminals to an electrical network;
b) commutating capacitors;
c) said electrical network having a step up high voltage transformer forming a resonant circuit; and
d) transistors switched via feedback winding;
wherein a self-resonant centre tapped high voltage transformer using switching devices for inversion of the DC supply voltage is provided for coupling to the ozone generator.
